# EUROPÄISCHE PATENTSCHRIFT

(11) **EP 0 994 539 B1**
(45) Veröffentlichungstag und Bekanntmachung des Hinweises auf die Patenterteilung: **28.05.2008**
(21) Anmeldenummer: 99117837.7
(22) Anmeldetag: 10.09.1999
(51) Int. Cl.: H01R 43/28, H01R 43/05, H01R 43/052, H02G 1/12

(54) **Einrichtung zur Konfektionierung eines Kabels**
Device for assembling a cable
Dispositif pour l'assemblage d'un câble

(30) Priorität: 21.09.1998 EP 98810940
(43) Veröffentlichungstag der Anmeldung: 19.04.2000
(73) Patentinhaber: Komax Holding AG, 6036 Dierikon (CH)
(72) Erfinder: Imgrüt, Peter, 6048 Horw (CH)
(74) Vertreter: Blöchle, Hans

(56) Entgegenhaltungen:
- GB-A- 2 292 327
- US-A- 4 084 310
- US-A- 4 506 566

## Beschreibung

Die Erfindung betrifft eine Einrichtung zur Konfektionierung eines Kabels bestehend aus Baueinheiten zum Festhalten und Bearbeiten des Kabels.

Zur Konfektionierung von Kabeln werden Automaten oder Halbautomaten eingesetzt, wobei bei einem Halbautomaten die Kabelzuführung manuell erfolgt. Die Kabelenden werden maschinell abisoliert und anschliessend ein Kontakt crimptechnisch mit dem Kabelende verbunden. Das Kabel wird von Hand eingelegt und während der Bearbeitung von einem Greifer gehalten, wobei das Kabel während der kurzen Bearbeitungszeit in der Hand behalten wird. Weitere Bearbeitungsschritte wie beispielsweise Nachschneiden und/oder Tüllenbestückung sind ebenfalls machbar

Unbefriedigend bei den bekannten Einrichtungen ist der aufwendige Abisoliervorgang und die qualitativ ungenügende Abisolierung des Kabelendes. Eine nicht vollständig eingeschnittene Isolation erschwert oder verunmöglicht den nachfolgenden Abziehvorgang oder zu tief eingeschnittene Isolation hat eine Beschädigung der Leiterlitze zur Folge. Fehlerhafte Crimpverbindungen werden nicht erkannt. Im weiteren ist die aufwendige Einstellarbeit beim Umrüsten der Konfektioniereinrichtung auf unterschiedliche Kabel nicht vorteilhaft.

Aus der US 4 506 566 ist eine Einrichtung zur Konfektionierung von Kabelenden bekannt geworden. Transportrollen transportieren ein Kabelende zu einer Führungseinrichtung, weiter zu einer Greifereinrichtung und weiter zu einem Messersatz, der das Kabelende anschneidet und abisoliert. Danach wird das Kabelende mittels einer Schwenkbewegung der Führungseinrichtung und Greifereinrichtung einer weiteren Bearbeitungstation zugeführt.

Nachteilig bei dieser Einrichtung ist, dass die Kabellängsachse in der durch die Schwenkbewegung aufgespannten Ebene liegt, was gesamthaft einen breitausladenden Maschinengrundriss ergibt.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und Einrichtung zur Konfektionierung von Kabelen zu schaffen, die die Konfektionierung qualitativ und produktiv verbessert.

Die durch die Erfindung erreichten Vorteile sind im wesentlichen darin zu sehen, dass das Einlegen der Kabel vereinfacht und zugleich die Auslösung des Bearbeitungsvorganges beschleunigt. Weiter vorteilhaft ist, dass fehlerhafte Crimpverbindungen erkannt und ausgeschieden werden. Im weiteren sind mit derselben Baueinheit mehrere unterschiedliche Bearbeitungsschritte ausführbar, was sich wiederum kostensenkend auf die Herstellungskosten der Konfektioniereinrichtung auswirkt.

Im folgenden wird die Erfindung anhand von ein Ausführungsbeispiel darstellenden Zeichnungen näher erläutert.
Es zeigen:
- Fig. 1: eine räumliche Darstellung einer halbautomatischen Konfektioniereinheit,
- Fig. 2 bis 9: eine schematische Darstellung eines Konfektioniervorganges an einem Kabelende,
- Fig. 10: eine Greifereinheit mit einem Kabel in der Stellung während des Bearbeitungsvorganges und
- Fig. 11: die Greifereinheit in der Stellung zum Abtrennen eines Kontaktes vom Kabel mit fehlerhafter Crimpverbindung.

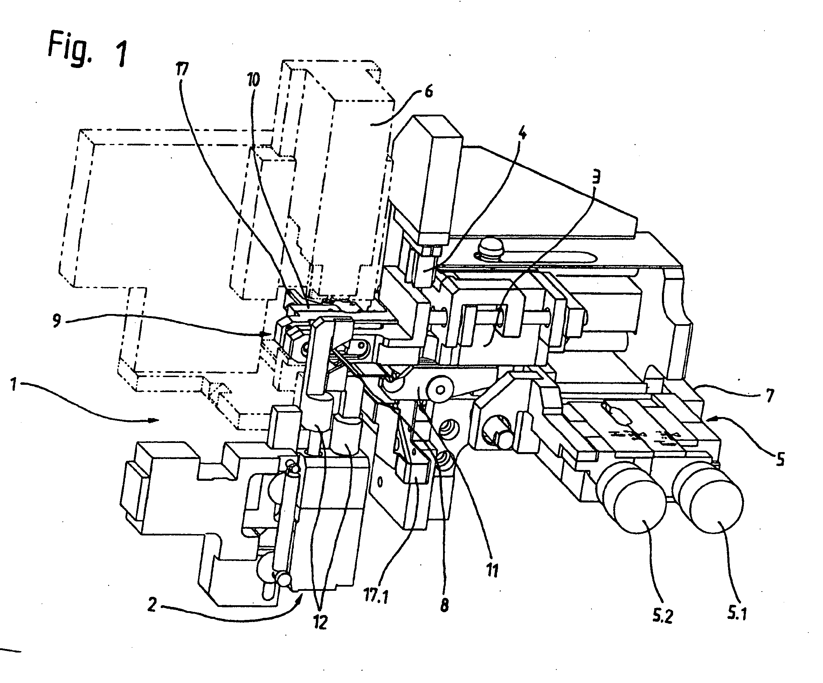

In den Fig. 1 bis 11 ist mit 1 eine Konfektioniereinheit für Kabelenden bezeichnet, die im wesentlichen die Kabelenden nachschneidet, abisoliert und Kontakte mittels Crimpverbindungen anschliesst. Die Konfektioniereinheit besteht beispielsweise aus den Baueinheiten Greifereinheit 2, Messerkopf 3, Ausstosser 4, Justiereinrichtung 5 und Crimpeinrichtung 6, wobei die Baueinheiten an einem Gehäuse 7 angeordnet sind. Das Kabelende 8.1 eines Kabels 8 wird manuell bis zu einem Bearbeitungsbereich 9 vorgeschoben, wobei ein Auslöser 10 die korrekte Position des Kabelendes 8.1 feststellt.

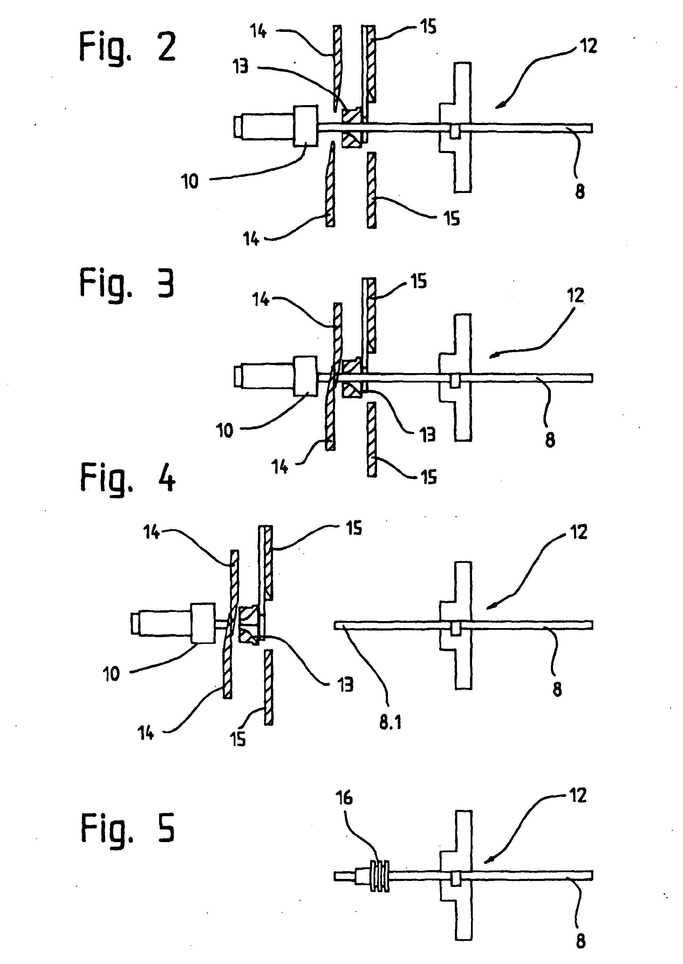

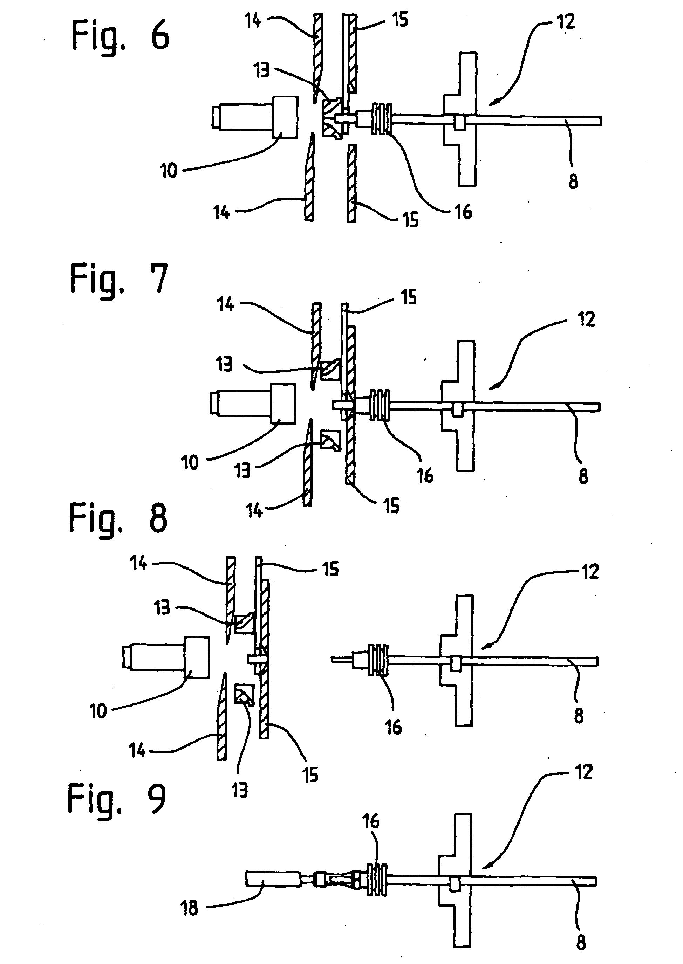

Sobald der Auslöser 10 das Kabelende 8.1 feststellt, beginnt der in den Fig. 2 bis 9 dargestellte Konfektioniervorgang, wobei fehlerhaft verbundene Kontakte mittels eines Kontaktschneiders 11 vom Kabel 8 getrennt werden. Der in den Fig. 2 bis 9 dargestellte Konfektioniervorgang ist eine mögliche Konfektioniervariante mit Nachschneiden, Tüllenbestückung, Abisolieren und Crimpen. Nachschneiden und/oder Tüllenbestückung kann beispielsweise auch entfallen. Wie in Fig. 2 dargestellt schliesst ein Kabelgreifer 12 der Greifereinheit 2 sobald das Kabel 8 bis zum Auslöser 10 vorgeschoben ist, wobei ein Einführtrichter 13 das Vorschieben des Kabels 8 bis in den Bearbeitungsbereich 9 erleichtert. Der geschlossene Kabelgreifer 12 hält das Kabel 8 bei allen weiteren Bearbeitungsschritten fest. In Fig. 3 wird ein Trennmesser 14 geschlossen, wobei Isolation und Litze des Kabelendes 8.1 auf die durch die einstellbare Lage des Trennmessers 14 vorgegebene, korrekte Länge nachgeschnitten werden. Die Lage des Trennmessers 14 ist mittels eines ersten Handrades 5.1 der Justiereinrichtung 5 einstellbar. Das Verstellen des Handrades 5.1 bewirkt eine gemeinsame Verschiebung von Auslöser 10 und Trennmesser 14, wobei der Abstand zwischen Auslöser 10 und Trennmessser 14 gleich bleibt. Ein Abisoliermesser 15 bleibt während dem Nachschneiden geöffnet. Auslöser 10, Trennmesser 14, Einführtrichter 13 und Abisoliermesser 15 sind am Messerkopf 3 angeordnet, der wie in Fig. 4 gezeigt eine in Kabelrichtung und weg vom Kabelende 8.1 führende Abzugbewegung ausführt. Anschliessend fährt der Messerkopf 3 zur Seite, wobei der Ausstosser 4 den Kabelabschnitt mittels einer Vertikalbewegung vom Messerkopf 3 entfernt. Der Bearbeitungsbereich 9 ist nun frei für die in Fig. 5 gezeigte Bestückung des Kabelendes 8.1 mit einer Dichtungstülle 16. Gemäss Fig. 6 fährt dann der Messerkopf 3 erneut bis zur Kabelachse vor und in Richtung Kabelachse bis zur Abisolierposition, die mittels eines zweiten Handrades 5.2 der Justiereinrichtung 5 einstellbar ist. In Fig. 7 werden die Abisoliermesser geschlossen und wie in Fig. 8 gezeigt die geschnittene Isolation mittels einer in der Richtung des Kabels 8 führenden Abzugsbewegung vom Kabel 8 entfernt. Damit der Bearbeitungsbereich 9 auch für den anschliessenden Crimpvorgang sauber bleibt nimmt eine erste Auffangschale nach unten fallende Schnittreste auf. Die erste Auffangschale wird durch ein schwenkbares Auffangblech 17 und durch Elemente des Messerkopfes 3 und der Messerblöcke gebildet. Anschliessend fährt der Messerkopf 3 zur Seite, wobei der Ausstosser 4 den Isolationsabschnitt mittels einer Vertikalbewegung vom Messerkopf 3 entfernt. Der Bearbeitungsbereich 9 ist nun frei für die in Fig. 9 gezeigte Herstellung einer Crimpverbindung, bei der die Crimpeinrichtung 6, beispielsweise eine Crimppresse einen Kontakt 18 mit dem Kabelende 8.1 crimptechnisch verbindet.

Falls die Crimpverbindung von der Crimpeinrichtung 6 als schlecht erkannt wird, wird das Kabel 8 mittels Greifereinheit 2 nach rechts zum Kontaktschneider 11 abgeschwenkt und der Kontakt 18 etwa an der Stelle des Abisolierschnittes abgetrennt, was den Vorteil hat, dass weniger Kabelabfall entsteht und damit eine Nachbearbeitung des Kabels begünstigt wird. Für alle übrigen Bearbeitungsschritte verbleibt die Greifereinheit 2 in der aufrechten Stellung und somit das Kabel 8 in der Einlegeposition.

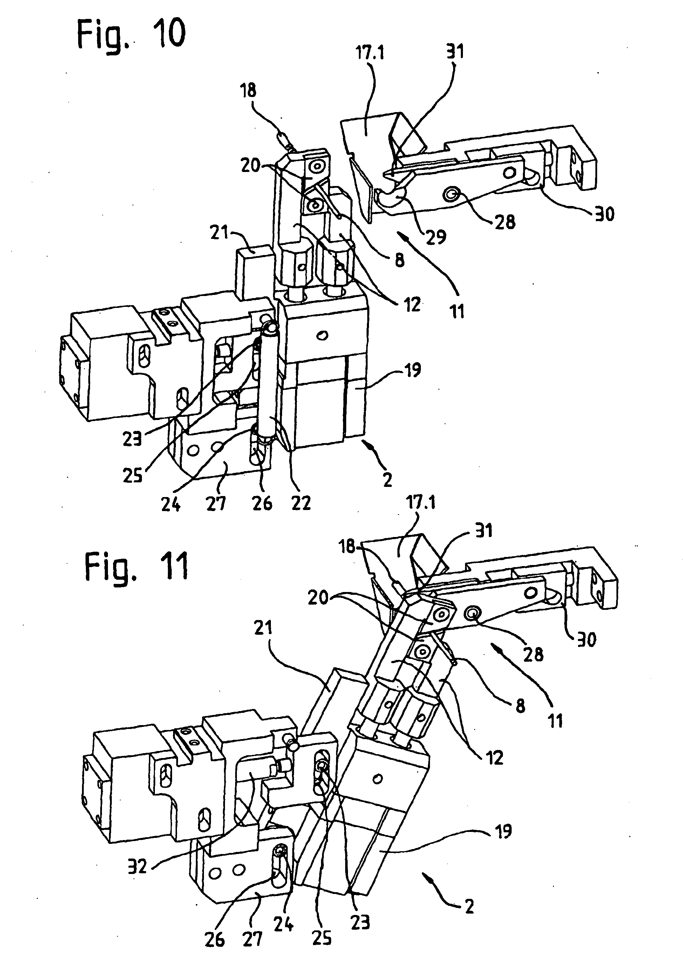

Fig. 10 zeigt die Greifereinheit 2 mit einem Kabel 8 in der Stellung während des Bearbeitungsvorganges. Ein Greifermodul 19 führt und treibt beide Kabelgreifer 12 an. Zum Festhalten des Kabels 8 werden beide Kabelgreifer 12 bewegt, bis die Greiferbacken 20 das Kabel 8 klemmen. Beim Crimpvorgang senkt die Crimpeinrichtung 6 ihre Crimpstempel auf den Kontakt 18 ab, wobei das abisolierte Kabelende 8.1 von oben in die Crimpzone des Kontaktes 18 eingelegt wird. Das Kabel 8 muss die Absenkbewegung mitmachen. Dazu drückt die Crimpeinrichtung 6 auf einen Stössel 21 der Greifereinheit 2 entgegen der Federkraft einer Feder 22. Erste Bolzen 23 und zweite Bolzen 24 führen die Greifereinheit 2 entlang einer ersten Führung 25 bzw. entlang einer zweiten Führung 26 eines Führungsmoduls 27. Nach dem Crimpvorgang gibt die Crimpeinrichtung 6 den Stössel 21 wieder frei, die Greifereinheit 2 wird dann mit der Federkraft der Feder 22 wieder in die Ausgangslage gehoben.

Fig. 11 zeigt die Greifereinheit 2 in der Stellung zum Abtrennen eines Kontaktes 18 vom Kabel 8 mit fehlerhafter Crimpverbindung. Die Rückstellfeder 22 ist der übersichtlicheren Darstellung wegen nicht gezeichnet. Während des Trennvorganges verbleiben die Kabelgreifer 12 in der bisherigen Stellung. Das Greifermodul 19 wird mittels eines Antriebes 32 des Führungsmoduls 27 um den als Drehachse dienenden zweiten Bolzen 24 gedreht. Durch die Drehbewegung verschiebt sich der erste Bolzen 23 in der ersten Führung 25 leicht nach unten, das Kabel 8 wird vom Kongfektionier-Bearbeitungsbereich 9 zum Abtrenn-Bearbeitungsbereich transportiert. Sobald das Greifermodul 19 die Endlage erreicht hat, wird der fehlerhaft verbundene Kontakt 18 mittels des Kontaktschneiders 11 vom Kabel 8 getrennt, wobei ein um eine Achse 28 drehbares Messer 29 mit Messerantrieb 30 zusammen mit einem feststehenden Gegenmesser 31 den Kontakt 18 vom Kabel 8 trennt, der in die zweite Auffangschale 17.1 fällt. Danach wird das Greifermodul 19 in die Ausgangslage gedreht und die Kabelgreifer 12 geöffnet.

Falls die Konfektioniereinheit 1 weitere Bearbeitungsbereiche 9 hat, können diese mit derselben Drehbewegung des Greifermoduls 19 auch angefahren werden und die Kabel 8 vom einen Bearbeitungsbereich zum anderen Bearbeitungsbereich transportiert werden.

Die Verwendung der Greifereinheit 2 ist weder auf halbautomatische Einrichtungen noch auf Einrichtungen mit der vorstehend beschriebenen Kombination von Baueinheiten zur Konfektionierung von Kabeln 8 beschränkt.

## Patentansprüche

1. Einrichtung zur Konfektionierung eines Kabels (8) bestehend aus Baueinheiten zum Festhalten und Bearbeiten des Kabels (8), wobei eine Greifereinheit (2) zum Festhalten des Kabels (8) während der Bearbeitung vorgesehen ist, mittels der das Kabel (8) zu mindestens einem Bearbeitungbereich (9) transportierbar ist und die Greifereinheit (2) ein Führungsmodul (27) und ein Greifermodul (19) mit antreibbaren Kabelgreifern (12) aufweist, die zum Festhalten des Kabels (8) Greiferbacken (20) aufweisen,
**dadurch gekennzeichnet,**
**dass** das Greifermodul (19) zur Anpassung an die Bearbeitungshöhe in einer senkrecht zur Kabellängsachse des Kabels (8) stehenden Ebene vertikal verschiebbar ist und zum Transportieren des Kabels (8) in derselben Ebene um eine.Achse (24) drehbar ist.

2. Einrichtung nach Anspruch 1,
**dadurch gekennzeichnet,**
**dass** das Führungsmodul (27) für die vertikale Verschiebung des Greifermoduls (19) Führungen (25,26) und für die Drehbewegung einen Antrieb (32) aufweist, der das Greifermodul (19) um die Achse (24) dreht.

3. Einrichtung nach einem der Ansprüche 1 oder 2,
**dadurch gekennzeichnet,**
**dass** das Greifermodul (19) mittels einer Crimpeinrichtung (6) vertikal verschiebbar ist und mittels eines Kraftspeichers (22) rückstellbar ist.

## Claims

1. Equipment for making up a cable (8), consisting of subassemblies for holding fast and processing the cable (8), wherein a gripper unit (2) for holding the cable (8) fast during processing is provided, by means of which the cable is transportable to at least one processing region (9), and the gripper unit (2) comprises a guide module (27) and a gripper module (19) with drivable cable grippers (12) which have gripper jaws (20) for holding the cable (8) fast, **characterised in that** the gripper module (19) is vertically displaceable in a plane perpendicular to the cable longitudinal axis of the cable (8) for adaptation to the processing height and is rotatable in the same plane about an axis (24) for transportation of the cable (8).

2. Equipment according to claim 1, **characterised in that** the guide module (27) comprises guides (25, 26) for the vertical displacement of the gripper module (19) and a drive (32), which rotates the gripper module (19) about the axis (24), for the rotational movement.

3. Equipment according to claim 1 or 2, **characterised in that** the gripper module (19) is vertically displaceable by means of a crimping device (6) and is resettable by means of a force store (22).

## Revendications

1. Dispositif pour l'assemblage d'un câble (8), composé d'unités de construction pour immobiliser et traiter le câble (8), dans lequel il est prévu une unité de préhension (2) pour immobiliser le câble (8) pendant le traitement, grâce à laquelle le câble (8) peut être transporté jusqu'à au moins une zone de traitement (9), et l'unité de préhension (2) comporte un module de guidage (27) et un module de préhension (19) avec des éléments de préhension de câble (12) aptes à être entraînés qui ont des mâchoires (20) pour immobiliser le câble (8),
**caractérisé en ce que** le module de préhension (19), pour s'adapter à la hauteur de traitement, est mobile verticalement dans un plan perpendiculaire à l'axe longitudinal du câble (8), et est apte à pivoter sur un axe (24) pour transporter le câble (8) dans le même plan.

2. Dispositif selon la revendication 1, **caractérisé en ce que** le module de guidage (27) comporte pour le déplacement vertical du module de préhension (19) des guidages (25, 26), et pour le mouvement rotatif un entraînement (32) qui fait pivoter le module de préhension (19) sur l'axe (24) .

3. Dispositif selon la revendication 1 ou 2, **caractérisé en ce que** le module de préhension (19) est mobile verticalement grâce à un dispositif de sertissage (6) et est apte à être ramené à sa position initiale grâce à un accumulateur d'énergie (22).
